# EUROPEAN PATENT APPLICATION

(11) **EP 2 808 754 A1**
(43) Date of publication of application: **03.12.2014**
(21) Application number: 13191311.3
(22) Date of filing: 01.11.2013
(51) Int. Cl.: G06F 1/16

(54) **Electronic device**

(30) Priority: 28.05.2013 JP 2013112337
(71) Applicant: Sony Corporation, Tokyo 108-0075 (JP)
(72) Inventor: Oguchi, Shinji, Minato-ku, Tokyo 108-0075 (JP); Tani, Atsushi, Minato-ku, Tokyo 108-0075 (JP); Hanatsuka, Akira, Minato-ku, Tokyo 108-0075 (JP)
(74) Representative: Turner, James Arthur

(57) **Abstract**

There is provided an electronic device including a flat main unit provided with a keyboard, a flat display unit having a display face, the flat display unit configured to movably slide between a first state that overlaps the main unit and a second state that is erect with respect to the main unit, and a single hinge that is arranged so as to overlap the keyboard in the first state, and is configured to couple the main unit and the display unit together so that the display unit can move with respect to the main unit.

## Description

The present disclosure relates to an electronic device.

JP-A-2009-230244, for example, describes an apparatus that slides and tilts up/down a display unit with respect to a main unit. This apparatus includes a main unit that has a keyboard on its upper face for inputting information, and a display unit that has on its upper face a display for displaying information. The apparatus slides and tilts up/down the display unit with respect to the main unit with a slide mechanism and a tilt up/down mechanism.

However, in the configuration described in JP-A-2009-230244, since the display unit is provided with a hinged support to the main unit at two locations on either end in the width direction of the main body, and a hinged support near the center in the depth direction of the main unit, the keyboard space can be severely restricted. Consequently, this makes it especially hard to widen the space in the depth direction of the apparatus, which can mean that only a very compact keyboard can be mounted in the flat space of the main unit. Therefore, it has been difficult to arrange constituent elements such as a touch pad or a palm rest in front of the keyboard.

Further, in the configuration described in JP-A-2009-230244, since a slide guide (groove) for sliding the display unit is provided at either end of the main unit, space in the main unit is taken up by this slide guide, which further hinders making the apparatus more compact and thin.

Consequently, a more compact and thinner apparatus with the maximum possible keyboard space has been expected.

According to an embodiment of the present disclosure, there is provided an electronic device including a flat main unit provided with a keyboard, a flat display unit having a display face, the flat display unit configured to movably slide between a first state that overlaps the main unit and a second state that is erect with respect to the main unit, and a single hinge that is arranged so as to overlap the keyboard in the first state, and is configured to couple the main unit and the display unit together so that the display unit can move with respect to the main unit.

The hinge may be arranged so as to extend toward a center in a width direction of the keyboard in the first state.

A step may be provided so that an upper face of the keyboard is lower than an upper face of the main unit. In the first state a space may be formed between the main unit and a face of the display unit opposing the main unit.

In the first state, the hinge may be provided in the space.

An upper face of the keyboard may be slanted with respect to an upper face of the main unit.

The display unit may include a convex-shaped area on at least a part of a face opposing the main unit in the first state. In the first state, the convex-shaped area may take up at least a part of the space, and a predetermined module is arranged in the convex-shaped area.

In the first state, the convex-shaped area may be arranged on either side of the hinge in the space.

The predetermined module may include at least one of a circuit board on which an electronic part is mounted, a communication module, and a speaker.

A pointing device may be provided at an area on a near side of the keyboard.

Thus, according to an embodiment of the present disclosure, the maximum possible space for the keyboard can be obtained, and the apparatus can be made more compact and thinner.

Embodiments of the invention will now be described with reference to the accompanying drawings, throughout which like parts are referred to by like references, and in which:
FIG. 1 is a schematic diagram illustrating a state in which a display unit overlaps a main unit;
FIG. 2 is a schematic diagram illustrating a state in which the display unit has been slid up and is erect with respect to the main unit;
FIG. 3 is a schematic diagram illustrating a state in which the state illustrated in FIG. 2 is viewed from a back face of an information processing apparatus;
FIG. 4 is a perspective diagram illustrating a state in which the display unit has been removed from the state illustrated in FIG. 1;
FIG. 5 is a schematic diagram illustrating a link mechanism of the main unit, the display unit, and a hinge;
FIG. 6 is a schematic diagram illustrating an example in which the hinge does not overlap a keyboard for the purpose of a comparison with FIG. 5;
FIG. 7 is a schematic diagram illustrating a cross-section along a front-rear direction of the center of the information processing apparatus;
FIG. 8 is a cross-sectional view illustrating FIG. 7 in more detail;
FIG. 9 is a schematic diagram illustrating a convex-shaped area provided on a rear side of the display unit;
FIG. 10 is a schematic diagram illustrating an internal configuration of the display unit;
FIG. 11 is a schematic diagram illustrating an example in which a module is arranged on the convex-shaped area; and
FIG. 12 is a schematic diagram illustrating an example in which a module is arranged on the convex-shaped area.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Hereinafter, the description will be given in the order as below.
1. Information processing apparatus appearance example
2. Link mechanism of main unit, display unit, and hinge
3. Utilization of the space provided between display unit and main unit

### (1. Information processing apparatus appearance example)

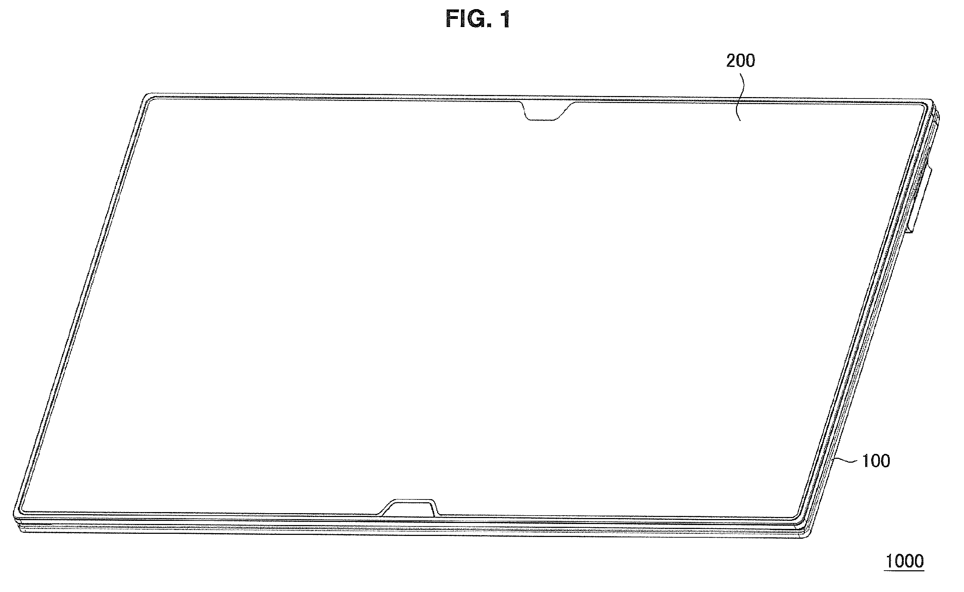

First, a schematic configuration of an information processing apparatus according to a first embodiment of the present disclosure will be described with reference to FIGS. 1 to 3.
FIGS. 1 to 3 are schematic diagrams illustrating the appearance of an information processing apparatus (electronic device) 1000. The information processing apparatus 1000 has a main unit 100 and a display unit 200. A keyboard 110 is provided on the main unit 100. The display unit 200 includes a touch panel 210 that is provided with a touch sensor on a display device such as a LCD.

FIG. 1 illustrates a state in which the display unit 200 overlaps the display unit 200. In this state, the user can perform a desired operation by operating the touch panel 210. Namely, the user can use the information processing apparatus 1000 as a so-called tablet terminal.

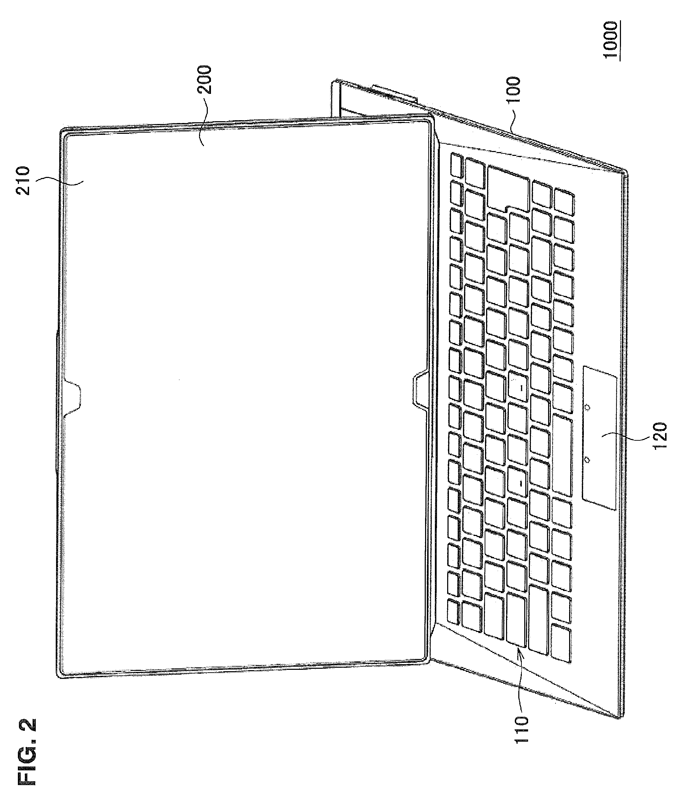

On the other hand, FIG. 2 illustrates a state in which the display unit 200 has been slid up and is erect with respect to the main unit 100. In this state, the user can perform a desired operation by operating the keyboard 110. Further, the user can also perform a desired operation by operating the touch panel 210 on the display unit 200. In addition, the user can also perform a desired operation by operating a touch pad 120, which is a pointing device provided on an area in front of the keyboard 110.

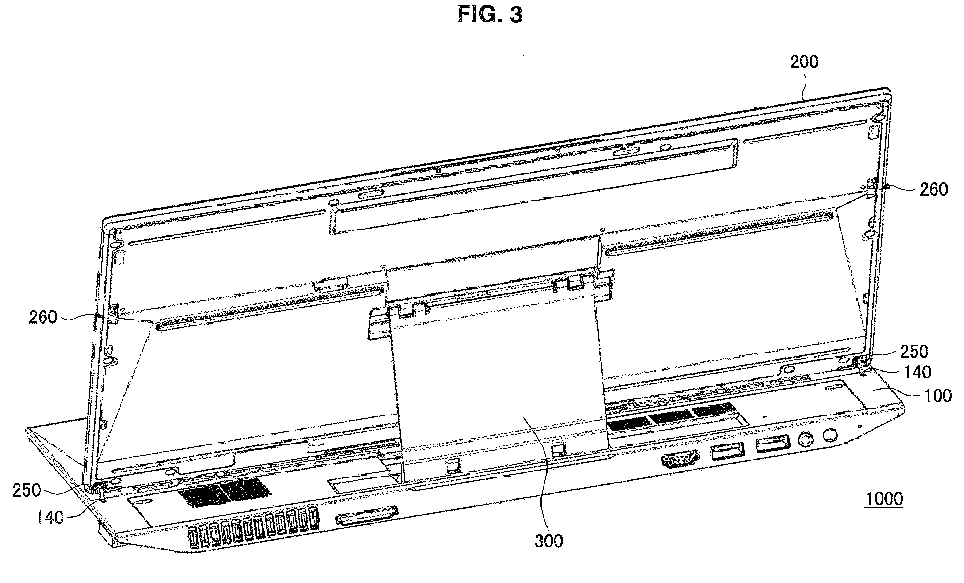

FIG. 3 illustrates a state in which the state illustrated in FIG. 2 is viewed from a back face of the information processing apparatus 1000. As illustrated in FIG. 3, the main unit 100 and the display unit 200 are connected via a hinge 300. The information processing apparatus 1000 can move between the state illustrated in FIG. 1 and the state illustrated in FIG. 2 by sliding the display unit 200 with respect to the main unit 100 via the hinge 300 (hereinafter also referred to as "surface-sliding").

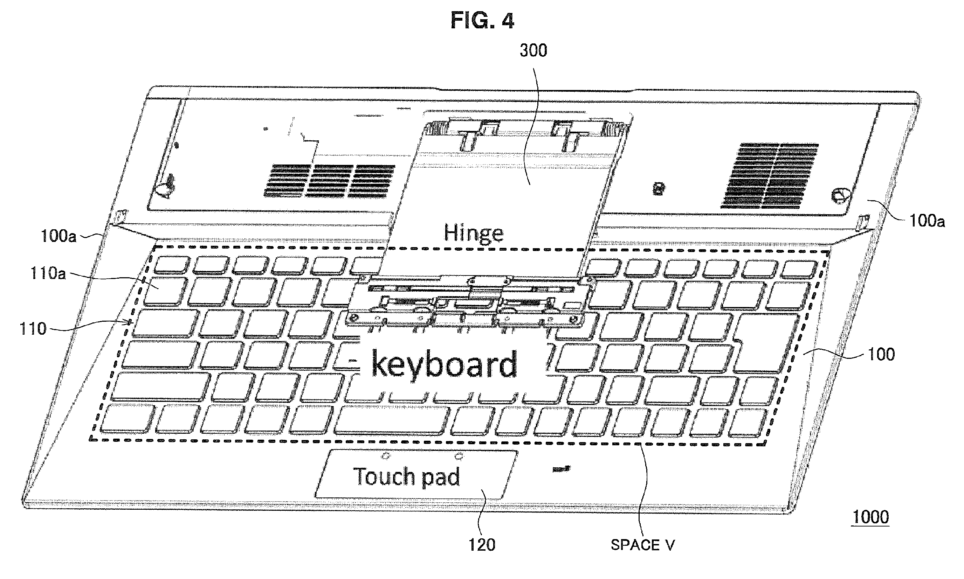

FIG. 4 is a perspective diagram illustrating a state in which the display unit 200 has been removed from the state illustrated in FIG. 1. As illustrated in FIG. 1, in the state illustrated in FIG. 1, in which the display unit 200 overlaps the main unit 100, a part of the near side of the hinge 300 overlaps the keyboard 110. In other words, the hinge 300 is provided extending toward a front side until it overlaps the keyboard 110 to ensure that the length of the hinge 300 in the front-rear direction is sufficiently long. Based on such a configuration, in a state in which the display unit 200 is open (FIG. 2), since the display unit 200 can be moved further back with respect to the main unit 100, the tilt angle of the display unit 200 can be increased.

### (2. Link mechanism of main unit, display unit, and hinge)

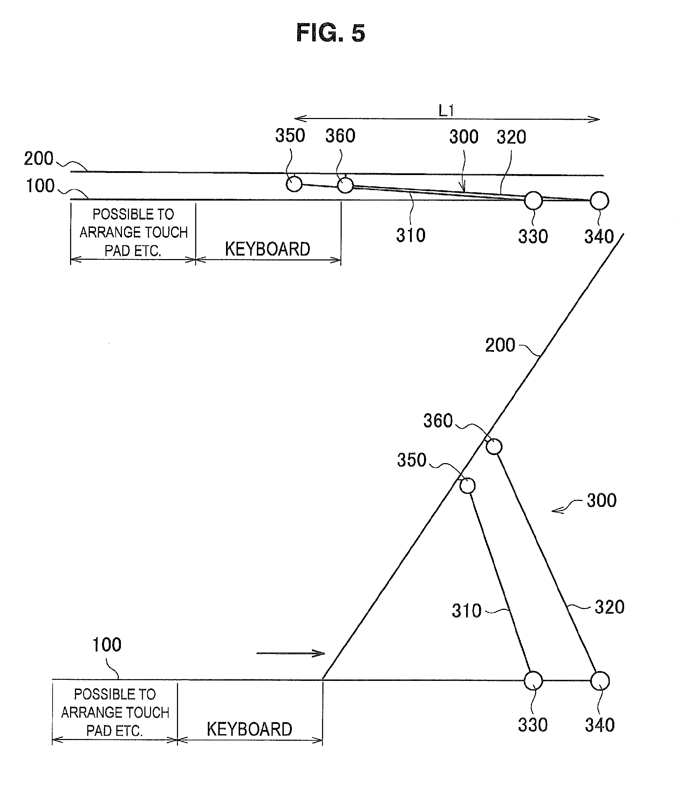

FIG. 5 is a schematic diagram illustrating a link mechanism of the main unit 100, the display unit 200, and the hinge 300. The upper section of FIG. 5 schematically illustrates the state illustrated in FIG. 1, and the lower section schematically illustrates the state illustrated in FIG. 2. In the example illustrated in FIG. 5, a length L1 of the hinge 300 is long, so that the hinge 300 and the keyboard 110 overlap. As illustrated in FIG. 5, the hinge 300 is configured from two hinge plates 310 and 320.The main unit 100 and the display unit 200 are connected via two links (joints) 330 and 340. Further, the main unit 100 and the display unit 200 are connected via two links (joints) 350 and 360. Based on such a configuration, when the display unit 200 is slid to the rear side of the main unit 100, the display unit 200 can be tilted with respect to the main unit 100.

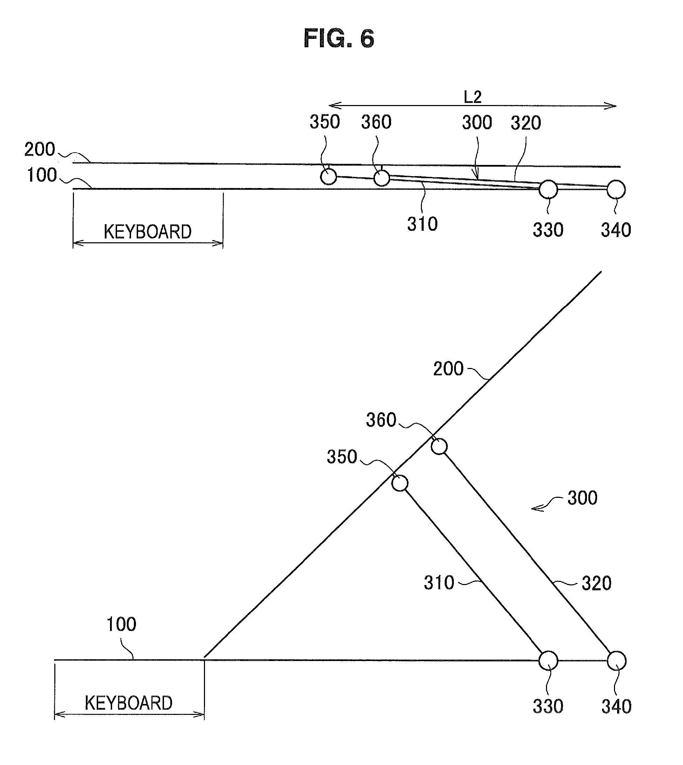

For the purpose of a comparison with FIG. 5, FIG. 6 illustrates an example in which a length L2 of the display unit 200 is shorter than the length L1 of the display unit 200 in FIG. 5, so that the hinge 300 does not overlap the keyboard 110. In this case, when the display unit 200 is tilted, since the length L2 of the hinge is short, the tilt angle is smaller than in FIG. 5, so the display unit 200 faces upward. Consequently, the keyboard 110 is arranged toward the front of the main unit 100, which means that the size of the keyboard 110 is limited.

On the other hand, in the present embodiment illustrated in FIG. 5, by configuring so that the length L of the hinge is sufficiently long by making the hinge 300 overlap the keyboard 110, the tilt angle can be sufficient increased. Consequently, in the state illustrated in FIG. 2, the lower edge of the display unit 200 can be positioned further toward the back of the main unit 100, so that the keyboard 110 can be arranged further toward the back of the main unit 100. This enables constituent elements, such as a touch pad, a palm rest, and a NFC device, to be arranged in an area in front of the keyboard 110. Further, by increasing the tilt angle, the visibility of the display unit 200 can be increased when the user places the information processing apparatus 1000 on a desk and operates it in the state illustrated in FIG. 2.

Further, by configuring so that the hinge 300 overlaps the keyboard 110, the usage area of the keyboard 110 can be increased without the position of the keyboard 110 being restricted by the position of the hinge 300. Consequently, the key pitch can also be increased. In addition, by configuring so that the hinge 300 overlaps the keyboard 110, the usage area of the hinge 300 widens, so that the lower edge of the display unit 200 can be moved as far as the back of the main unit 100 when in the state illustrated in FIG. 2. Consequently, the tilt angle can be increased and the area of the keyboard 110 can be further widened. Moreover, this also enables the keyboard 110 to be arranged further to the rear of the main unit 100. Therefore, as illustrated in FIG. 2, the touch pad 120 can be arranged on the front side of the keyboard 110, and a NFC device, a palm rest and the like can also be arranged. On the other hand, as illustrated in FIG. 6, if the hinge 300 is configured so as to not overlap the keyboard 110, this means that the keyboard 110 is arranged further to the front of the main unit 100, which makes it difficult to ensure a space to provide the touch pad 120. Therefore, by configuring like in the present embodiment so that the hinge 300 overlaps the keyboard 110, a useful space can be ensured on the front side of the keyboard 110, so that a configuration having a greater added value can be obtained.

In addition, in the present embodiment, the hinge 300 is arranged at only one location in the center of the main unit 100. If, for example, the hinge 300 is arranged at two locations at either end of the main unit 100, a space for the hinges 300 would probably be provided at either end of the keyboard 110, meaning that the horizontal width of the main unit 100 would likely increase. Moreover, this may also mean that a concave portion, a groove or the like to avoid the hinges is provided on the main unit 100 at either end of the keyboard 110. Therefore, by arranging the hinge 300 at just one location in the center of the main unit 100, the information processing apparatus 1000 can be made as compact as possible, and the configuration of the information processing apparatus 1000 can be made simple so as to not harm the appearance.

### (3. Utilization of the space provided between display unit and main unit)

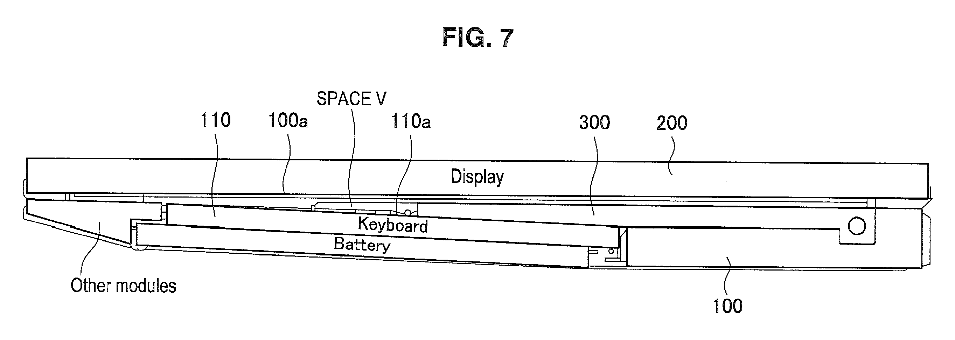

Next, the configuration in which the hinge 300 is housed between the main unit 100 and the display unit 200 in the state illustrated in FIG. 1 will be described. FIG. 7 is a schematic diagram illustrating a cross-section along a front-rear direction of the center of the information processing apparatus 1000. As illustrated in FIG. 7, an upper face 110a of the keyboard 110 is arranged at a predetermined angle with respect to an upper face 100a of the main unit 100. The upper face 100a of the main unit 100 and the upper face 110a of the keyboard 110 are not parallel. Consequently, as illustrated in FIG. 4, a step between the upper face 110a of the keyboard 110 and the upper face 100a of the main unit 100 becomes greater and greater heading toward the back of the main unit 100. Based on such a configuration, a predetermined space V is formed between the display unit 200 and the keyboard 110. In the state illustrated in FIG. 1, the hinge 300 is arranged in this space V. Therefore, the hinge 300 can be housed in the space V without being interfered with by the keyboard 110 or the display unit 200.

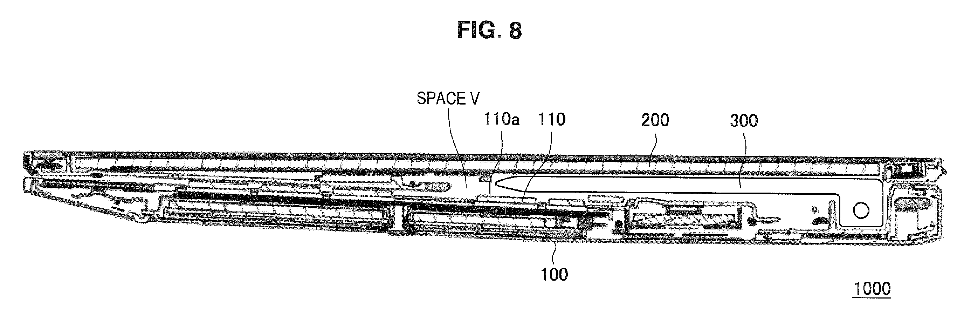

FIG. 8 is a cross-sectional view illustrating FIG. 7 in more detail. As illustrated in FIG. 8, the hinge 300 is arranged in the space V between the keyboard 110 and the display unit 200.

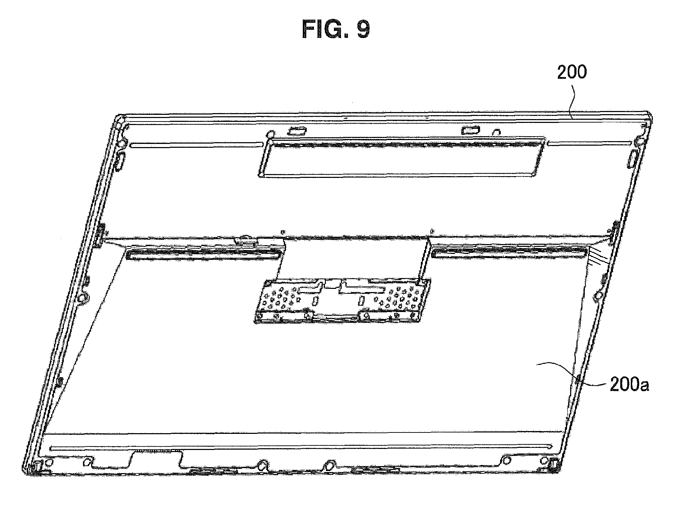

Further, since the hinge 300 is provided at only one location in the center of the main unit 100, the space V exists also on either side of the hinge 300. In the present embodiment, a bulge (convex-shaped area) 200a that protrudes toward the keyboard 110 is provided on the rear side of the display unit 200 so as to take up the space V on either side of the hinge 300. FIG. 9 is a schematic diagram illustrating a convex-shaped area 200a provided on the rear side of the display unit 200. As illustrated in FIG. 9, the bulge 200a is provided to the left and right of the center of the display unit 200. The bulge 200a is formed so that the thickness of the display unit 200 becomes thicker heading further back beyond the main unit 100 in the state illustrated in FIG. 1 to match the shape of the space V formed between the display unit 200 and the main unit 100.

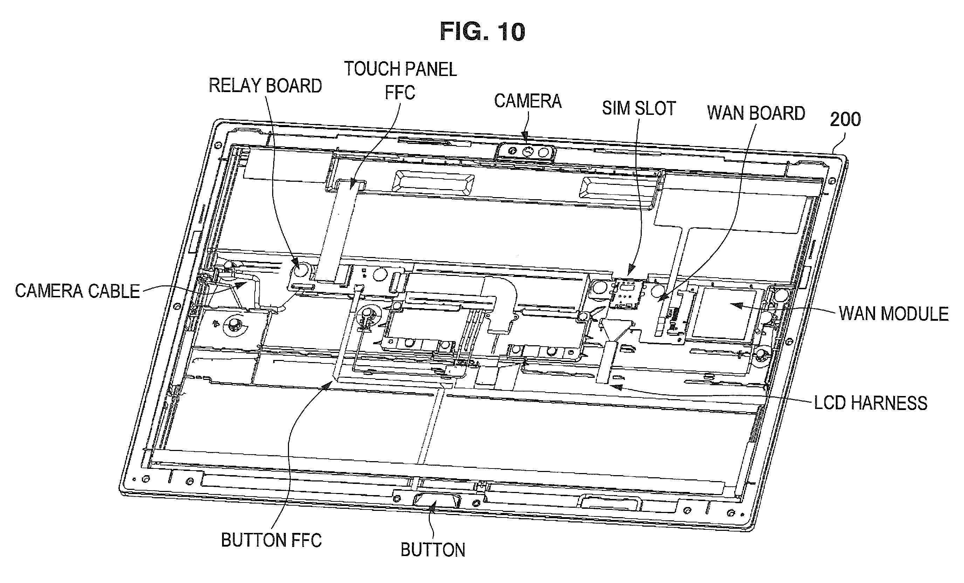

Based on this configuration, various modules can be arranged on the convex-shaped area 200a of the display unit 200. FIG. 10 is a schematic diagram illustrating an internal configuration of the display unit 200. For example, a relay board 220 that combines three types of signal line into one from a touch panel board, a camera module, and a button board may be arranged on one convex-shaped area 200a. Further, on another convex-shaped area 200a, a board mounted with a WAN module and a SIM slot may be arranged. In addition, the convex-shaped area 200a can also be utilized without leaving any space by arranging an LCD harness, an antenna cable and the like on the convex-shaped area 200a.

Further, other modules, such as a speaker and a battery, may also be arranged on the convex-shaped area 200a. If a speaker is arranged on the convex-shaped area 200a, since a very large space can be used compared with the space on the main unit 100 side, a high audio quality speaker can be arranged. Compared with when arranged on the main unit 100, sound can be transmitted from a higher position, so that audio quality can be increased. Further, if a battery is arranged on the convex-shaped area 200a, the battery capacity can be increased.

Generally, modules that are noise generation sources, such as a motherboard, are arranged on the main unit 100. Consequently, it is desirable to arrange communication system modules, antennas and the like that are susceptible to the effects of noise on the convex-shaped area 200a of the display unit 200. This enables the effects of noise from the main unit 100 to be suppressed. If arranging an antenna, the antenna can also be effectively employed as a countermeasure against SAR. Further, a NFC (near field communication) device may also be mounted on the convex-shaped area 200a.

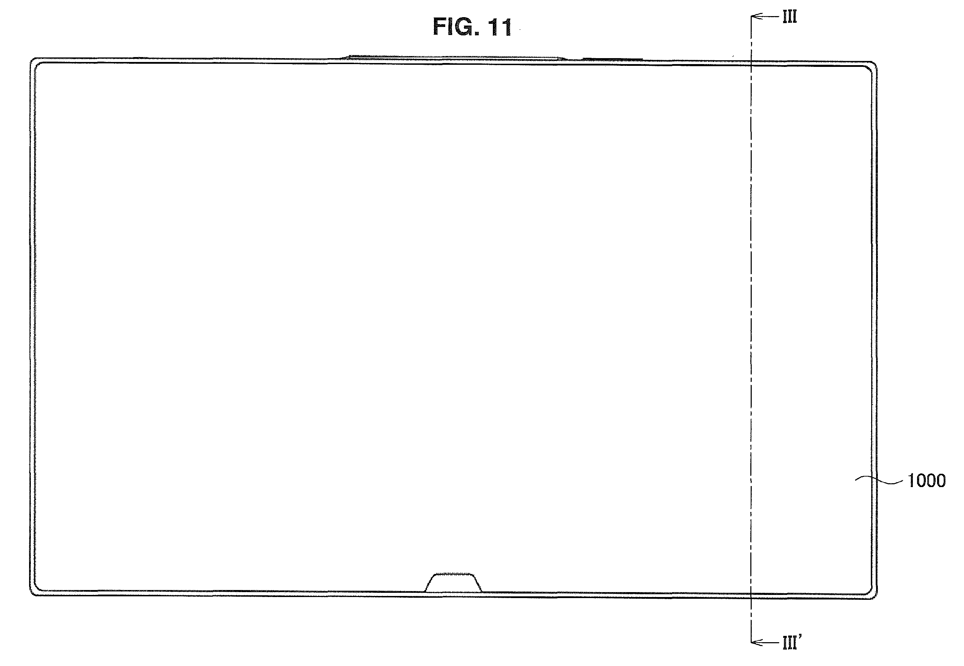

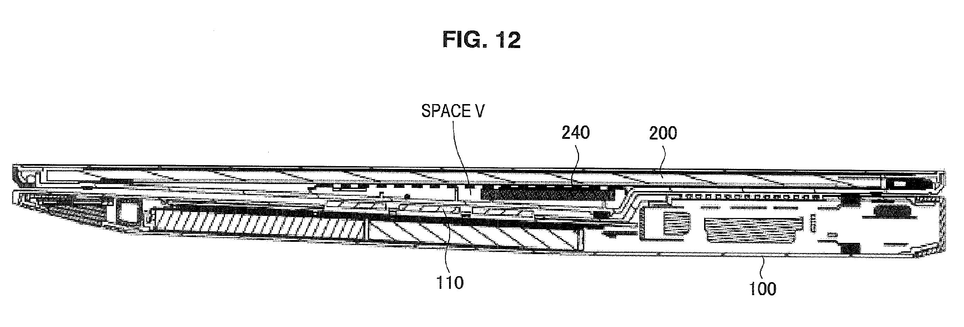

FIGS. 11 and 12 are schematic diagrams illustrating examples in which a module is arranged on the convex-shaped area 200a. FIG. 11 illustrates the state of FIG. 1 as viewed from above. Further, FIG. 12 illustrates a cross-section along the dashed line III-III' in FIG. 11, in which a cross-section further to the right side then the hinge 300 is shown. As illustrated in FIG. 12, a WAN board 240 is arranged as a module on the convex-shaped area 200a on the right side of the display unit 200. Other modules can also be similarly arranged. Since the vertical width of the space V increases heading toward the back of the information processing apparatus 1000, it is preferred to arrange modules that are comparatively thick at the far side of the information processing apparatus 1000, and modules that are comparatively thin at the near side of the information processing apparatus 1000.

Thus, by arranging the upper face 110a of the keyboard 110 at an angle with respect to the upper face 100a of the main unit 100, a space V can be provided between the keyboard 110 and the display unit 200, and the hinge 300 can be arranged overlapping the keyboard 110. Further, by providing the space V between the keyboard 110 and the display unit 200, the convex-shaped area 200a can be provided on either side of the hinge 300. Therefore, the information processing apparatus 1000 can be made as small as possible by effectively utilizing the space V by arranging modules on the convex-shaped area 200a. These modules can be arranged without increasing the overall thickness of the information processing apparatus 1000. By arranging modules that would normally be arranged on the main unit 100 on the display unit 200 side, wasted space can be eliminated, and the information processing apparatus 1000 can be made more compact and lighter.

According to the present embodiment described above, in a configuration in which the display unit 200 surface-slides with respect to the main unit 100, since the hinge 300 is provided at only one location in the center of the main unit 100, the image processing apparatus 1000 can be made even more compact than when the hinge 300 is provided at either side of the main unit 100. Further, when the display unit 200 overlaps the main unit 100 (state illustrated in FIG. 1), since the space V is formed between the 100 and the display unit 200,the hinge 300 can be housed in this space V. In addition, when the convex-shaped area 200a is provided on the face of the display unit 200 opposing the main unit 100, and the display unit 200 overlaps the main unit 100 (state illustrated in FIG. 1), since the convex-shaped area 200a of the display unit 200 takes up the space V, a predetermined module can be housed on the convex-shaped area 200a. Consequently, the space V can be effectively utilized, and the image processing apparatus 1000 can be made even more compact.

It should be understood by those skilled in the art that various modifications, combinations, sub-combinations and alterations may occur depending on design requirements and other factors insofar as they are within the scope of the appended claims or the equivalents thereof.

Additionally, the present technology may also be configured as below.
(1) An electronic device including:
   a flat main unit provided with a keyboard;
   a flat display unit having a display face, the flat display unit configured to movably slide between a first state that overlaps the main unit and a second state that is erect with respect to the main unit; and
   a single hinge that is arranged so as to overlap the keyboard in the first state, and is configured to couple the main unit and the display unit together so that the display unit can move with respect to the main unit.
(2) The electronic device according to (1), wherein the hinge is arranged so as to extend toward a center in a width direction of the keyboard in the first state.
(3) The electronic device according to (1),
   wherein a step is provided so that an upper face of the keyboard is lower than an upper face of the main unit, and
   wherein in the first state a space is formed between the main unit and a face of the display unit opposing the main unit.
(4) The electronic device according to (3), wherein in the first state, the hinge is provided in the space.
(5) The electronic device according to (3), wherein an upper face of the keyboard is slanted with respect to an upper face of the main unit.
(6) The electronic device according to (3),
   wherein the display unit includes a convex-shaped area on at least a part of a face opposing the main unit in the first state, and
   wherein in the first state, the convex-shaped area takes up at least a part of the space, and a predetermined module is arranged in the convex-shaped area.
(7) The electronic device according to (6), wherein in the first state, the convex-shaped area is arranged on either side of the hinge in the space.
(8) The electronic device according to (6), wherein the predetermined module includes at least one of a circuit board on which an electronic part is mounted, a communication module, and a speaker.
(9) The electronic device according to (1), wherein a pointing device is provided at an area on a near side of the keyboard.

## Claims

1. An electronic device comprising:
a flat main unit provided with a keyboard;
a flat display unit having a display face, the flat display unit configured to movably slide between a first state that overlaps the main unit and a second state that is erect with respect to the main unit; and
a single hinge that is arranged so as to overlap the keyboard in the first state, and is configured to couple the main unit and the display unit together so that the display unit can move with respect to the main unit.

2. The electronic device according to claim 1, wherein the hinge is arranged so as to extend toward a center in a width direction of the keyboard in the first state.

3. The electronic device according to claim 1,
wherein a step is provided so that an upper face of the keyboard is lower than an upper face of the main unit, and
wherein in the first state a space is formed between the main unit and a face of the display unit opposing the main unit.

4. The electronic device according to claim 3, wherein in the first state, the hinge is provided in the space.

5. The electronic device according to claim 3, wherein an upper face of the keyboard is slanted with respect to an upper face of the main unit.

6. The electronic device according to claim 3,
wherein the display unit includes a convex-shaped area on at least a part of a face opposing the main unit in the first state, and
wherein in the first state, the convex-shaped area takes up at least a part of the space, and a predetermined module is arranged in the convex-shaped area.

7. The electronic device according to claim 6, wherein in the first state, the convex-shaped area is arranged on either side of the hinge in the space.

8. The electronic device according to claim 6, wherein the predetermined module includes at least one of a circuit board on which an electronic part is mounted, a communication module, and a speaker.

9. The electronic device according to claim 1, wherein a pointing device is provided at an area on a near side of the keyboard.
